(19) **Europäisches Patentamt**

**European Patent Office**

**Office européen des brevets**

(11) **EP 1 089 508 B1**

(12) **FASCICULE DE BREVET EUROPEEN**

(45) Date de publication et mention
de la délivrance du brevet:
**24.08.2005  Bulletin 2005/34**

(51) Int Cl.⁷: **H04L 25/03**

(21) Numéro de dépôt: **00203258.9**

(22) Date de dépôt: **20.09.2000**

(54) **Dispositif de récupération du rythme d'horloge utilisant un égaliseur fixe**

Vorrichtung zur Taktrückgewinnung unter Verwendung eines festen Entzerrers

Device for clock recovery using a fixed equalizer

(84) Etats contractants désignés:
**DE ES FR GB IT**

(30) Priorité: **28.09.1999  FR 9912065**

(43) Date de publication de la demande:
**04.04.2001  Bulletin 2001/14**

(73) Titulaire: **Koninklijke Philips Electronics N.V.**
**5621 BA Eindhoven (NL)**

(72) Inventeur: **Rouvellou, Laurent**
**75008 Paris (FR)**

(74) Mandataire: **Landousy, Christian**
**Société Civile SPID,**
**156, Boulevard Haussmann**
**75008 Paris (FR)**

(56) Documents cités:
**FR-A- 2 710 219       US-A- 4 633 482**
**US-A- 5 420 884       US-A- 5 502 506**

**Description**

La présente invention concerne un système récepteur comprenant un premier égaliseur associé à un premier détecteur à seuil et un dispositif permettant de récupérer le rythme d'horloge d'un système émetteur pour ledit système récepteur à partir d'un signal égalisé et d'un signal issu du seuillage.

Un tel système récepteur pourra être inclus dans tout système de communication numérique, comme, entre autres applications possibles, un modem, un appareil récepteur décodeur de télévision ('set-top-box' en anglais), ou encore un téléviseur.

La demande de brevet FR 93 10866 décrit un tel système récepteur. Le dispositif de récupération du rythme d'horloge comporte une boucle à verrouillage de phase du second ordre dont l'entrée est une fonction dépendant du décalage entre les horloges des systèmes émetteur et récepteur. La sortie de cette boude est envoyée à un dispositif de contrôle qui décide de l'avance ou du retard à appliquer à l'horloge du système récepteur.

Le système récepteur tel qu'il est conçu dans l'art antérieur présente un certain nombre d'inconvénients.

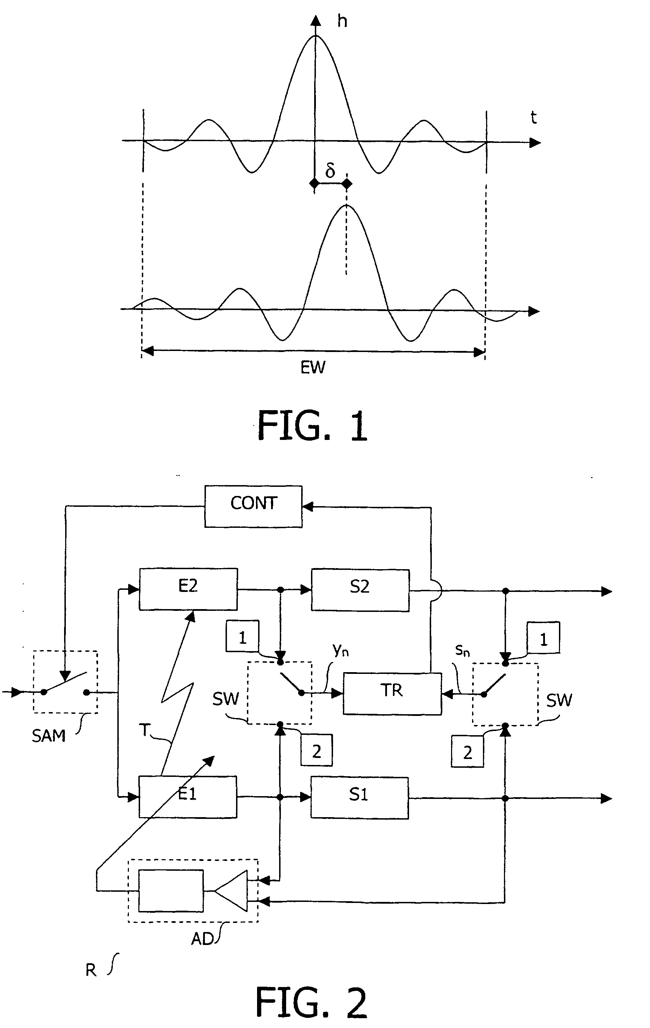

Tout d'abord, le fonctionnement simultané de l'égaliseur adaptatif et du dispositif de récupération du rythme d'horloge est une source d'instabilité pour le système récepteur. En effet, ces deux dispositifs interfèrent entre eux, notamment lors de la phase d'initialisation de la communication. Durant cette période, le rythme d'horloge n'est pas encore récupéré et l'adaptation de l'égaliseur dépend alors notablement de l'erreur due au décalage entre les horloges des systèmes émetteur et récepteur. Il en résulte, comme l'illustre la figure 1, un décalage ($\delta$) de la réponse impulsionnelle (h(t)) du filtre de l'égaliseur, qui est ici modélisée par une fonction de Nyquist comportant un lobe principal et des lobes secondaires, pour compenser cette erreur. La réponse impulsionnelle du filtre étant de longueur limitée, sa longueur étant définie par une fenêtre d'égalisation (EW), elle se trouve décentrée dans la fenêtre d'égalisation ce qui revient à la raccourcir. Le canal est ainsi mal égalisé et la convergence du dispositif de récupération du rythme d'horloge se trouve ralentie.

De plus, les opérations réalisées par l'égaliseur adaptatif et par le dispositif de récupération du rythme d'horloge sont coûteuses en terme de temps de calcul, notamment durant la phase de transmission de données.

L'invention a pour but de remédier dans une large mesure à ces inconvénients, en proposant un système récepteur stable comprenant un égaliseur efficace associé à un dispositif de récupération du rythme d'horloge assurant une convergence rapide de l'horloge du système récepteur vers celle du système émetteur, le système récepteur permettant également d'économiser du temps de calcul lors de la phase de transmission des données.

A cet effet, la présente invention propose un système récepteur caractérisé en ce qu'il comprend également un second égaliseur, qui est un égaliseur fixe, associé à un second détecteur à seuil ainsi qu'un dispositif permettant de commuter d'un premier mode de fonctionnement où le signal égalisé et le signal issu du seuillage sont destinés à être délivrés respectivement par le second égaliseur et le second détecteur à seuil vers un second mode de fonctionnement où lesdits signaux sont destinés à être délivrés par le premier égaliseur et le premier détecteur à seuil.

Un tel système récepteur permet de faire fonctionner indépendamment le premier égaliseur, c'est à dire l'égaliseur adaptatif, et le dispositif de récupération du rythme d'horloge lors d'un premier mode de fonctionnement correspondant à la phase d'initialisation de la communication. Durant cette période, le dispositif de récupération du rythme d'horloge fonctionne avec un second égaliseur comportant un filtre dont les coefficients sont fixes et qui n'interfère plus de ce fait avec lui, conférant ainsi une plus grande stabilité au système récepteur et permettant une convergence plus rapide de l'horloge du système récepteur vers celle du système émetteur.

La présente invention propose également un système récepteur caractérisé en ce que le premier égaliseur est destiné à transférer, à des intervalles de temps appropriés, des coefficients d'un filtre adaptatif vers le second égaliseur, lesdits coefficients étant calculés à partir d'une erreur d'égalisation, égale à une différence entre les signaux issus du premier égaliseur et du premier détecteur à seuil.

Ainsi, les coefficients du filtre associé à l'égaliseur fixe sont rafraîchis régulièrement améliorant encore la convergence de l'horloge du système récepteur vers celle du système émetteur.

La présente invention propose également un système récepteur caractérisé en ce qu'il comprend un moyen permettant de faire fonctionner alternativement le dispositif de récupération du rythme d'horloge et le premier égaliseur durant le second mode de fonctionnement.

Ainsi, dans le second mode de fonctionnement, correspondant à la phase de transmission de données, le dispositif de récupération du rythme d'horloge et le premier égaliseur fonctionne à tour de rôle, ce qui permet d'économiser 50% de la charge de calcul.

Un tel système récepteur pourra enfin être avantageusement inclus dans n'importe quel système de communication numérique.

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés dans lesquels :

- la figure 1 est une représentation de la réponse impulsionnelle du filtre de l'égaliseur et du décalage de la réponse impulsionnelle dû au fonctionnement simultané de l'égaliseur adaptatif et du dispositif de récupération du rythme d'horloge,
- la figure 2 est une représentation schématique illustrant le fonctionnement général d'un système récepteur selon l'invention,
- la figure 3 est une représentation schématique d'un système récepteur selon l'invention dans le second mode de fonctionnement,
- la figure 4 est une représentation schématique montrant le fonctionnement d'une boude à verrouillage de phase du second ordre.

La figure 2 est une illustration du principe de fonctionnement général d'un système récepteur (R) selon l'invention.

Un tel système récepteur comprend tout d'abord un moyen (SAM) pour échantillonner, à la fréquence d'échantillonnage du système récepteur, un signal démodulé.

Le système récepteur comprend ensuite des premier (E1) et second (E2) égaliseurs destinés à recevoir le signal échantillonné.

Le système récepteur comprend également des premier (S1) et second (52) détecteurs à seuil destinés à recevoir respectivement des signaux issus du premier (E1) et du second (E2) égaliseur.

Le premier égaliseur (E1) est un égaliseur adaptatif. Dans le mode de réalisation préféré, le filtre de l'égaliseur est un filtre numérique passe-bande à réponse impulsionnelle finie appelé filtre FIR. L'égalisation est dans ce cas réalisée en utilisant un dispositif d'adaptation (AD) qui calcule les coefficients du filtre numérique FIR en fonction de l'erreur d'égalisation $e_n$ définie par : $e_n = y_n - s_n$, selon une méthode classique de minimisation. Le second égaliseur (E2) est quant à lui un égaliseur fixe, utilisant de ce fait un filtre dont les coefficients sont figés.

Le système récepteur comprend, en outre, un dispositif de récupération du rythme d'horloge (TR) d'un système émetteur pour le système récepteur destiné à recevoir les signaux égalisé ($y_n$) et issu du seuillage ($s_n$) provenant respectivement d'un égaliseur et du détecteur à seuil qui lui est associé.

La récupération du rythme d'horloge est réalisée à l'aide d'une boucle à verrouillage de phase du second ordre dont l'entrée est une estimation de l'erreur de phase calculée à partir de l'erreur d'égalisation $e_n$. La sortie de la boude à verrouillage de phase est envoyée à un dispositif de contrôle de l'horloge du système récepteur (CONT) qui permet d'avancer ou de retarder l'échantillonnage (SAM) du signal reçu.

Le système récepteur comprend enfin un dispositif (SW) permettant de commuter d'un premier mode de fonctionnement (position 1) où le dispositif de récupération du rythme d'horloge (TR) reçoit les signaux ($y_n$ et $s_n$) provenant du second égaliseur (E2) et du second détecteur à seuil (S2) vers un second mode de fonctionnement (position 2) où le dispositif de récupération du rythme d'horloge (TR) reçoit les signaux ($y_n$ et $s_n$) provenant du premier égaliseur (E1) et du premier détecteur à seuil (S1).

Dans le mode de réalisation préféré, le premier mode de fonctionnement correspond à la phase d'initialisation de la communication. Il apparaît ainsi que lors de cette phase, l'égaliseur adaptatif (E1) et le dispositif de récupération du rythme d'horloge (TR) travaille indépendamment l'un de l'autre, le dispositif de récupération du rythme d'horloge recevant dans ce cas les signaux issus de l'égaliseur fixe (E2) et du second détecteur à seuil (S2).

Durant la phase d'initialisation de la communication, le dispositif d'adaptation (AD) associé à l'égaüseur adaptatif calcule les coefficients du filtre adaptatif qui sont transférés (T), à des intervalles de temps appropriés, de l'égaliseur adaptatif (E1) vers l'égaliseur fixe (E2). Deux à trois transferts de coefficients sont effectués dans le mode de réalisation préféré. Les coefficients du filtre de l'égaliseur fixe (E2) sont tout d'abord initialisés à 0. Le premier transfert intervient ensuite après traitement d'un séquence de référence comprenant un nombre déterminé de symboles (512 dans le mode de réalisation préféré), afin de permettre une convergence grossière de la boude à verrouillage de phase. Puis les transferts suivants sont effectués en fonction de la valeur d'un rapport signal sur bruit calculé à la sortie de l'égaliseur fixe (E2) et assurent une convergence plus fine du processus. Un tel rafraîchissement des coefficients du filtre de l'égaliseur fixe (E2) permet d'améliorer la convergence du dispositif de récupération du rythme d'horloge.

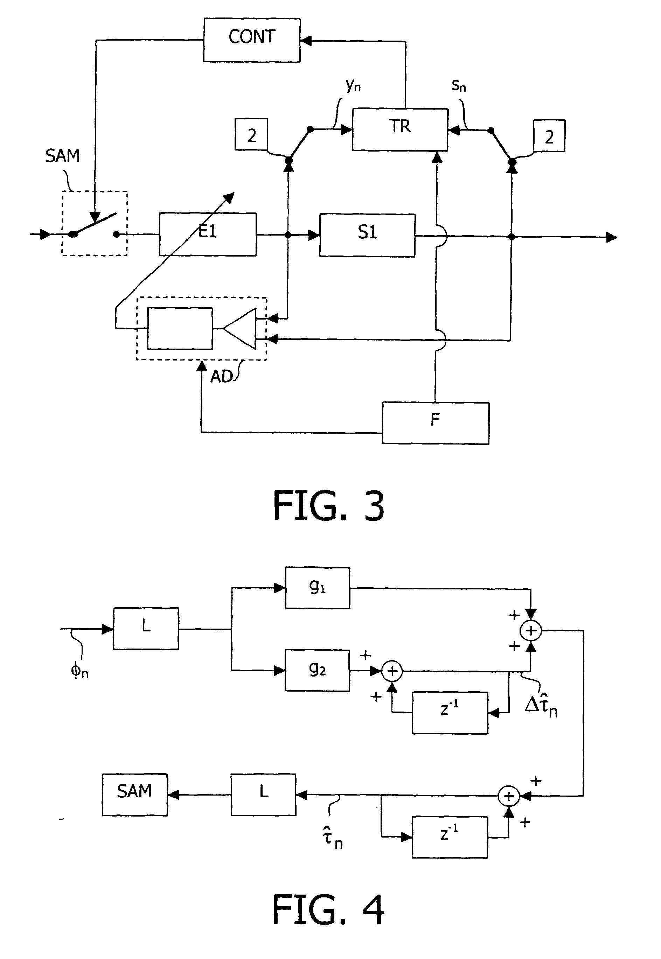

Dans le mode de réalisation préféré, le second mode de fonctionnement correspond à la phase de transmission des données. La figure 3 est une représentation schématique du système récepteur selon l'invention lors de ce second mode de fonctionnement.

Durant cette phase, le dispositif de commutation se trouve en position 2. Cependant, l'égaliseur adaptatif (E1) et le dispositif de récupération du rythme d'horloge (TR) ne fonctionnent pas simultanément dans le mode de réalisation préféré. Pour cela, le système récepteur selon l'invention dispose d'un moyen (F) permettant de geler, pendant un laps de temps donné, le fonctionnement de l'un des deux dispositifs tandis que l'autre dispositif fonctionne normalement. Dans le mode de réalisation préféré, le fonctionnement de chacun des dispositifs est figé pendant la moitié du temps en réglant son gain à zéro. Ce mode de fonctionnement permet ainsi de gagner 50% en terme de charge de calcul.

La figure 4 montre de façon plus détaillée le fonctionnement de la boucle à verrouillage de phase du second ordre du dispositif de récupération du rythme d'horloge.

Dans le mode de réalisation préféré, le décalage de phase $\tau$ entre le système émetteur et le système récepteur est estimé à partir d'une fonction coût $\phi$ qui est définie, dans le mode de réalisation préféré, comme suit :

$$\phi_n = \frac{|s_n|^2 - |y_n|^2}{Re\left(s_n \sum_{i=0}^{k-1} \frac{(-1)^{k-i+1}}{3(k-i)} (s_{n-k+i} - s_{n+k-i})\right)} \;,$$

où :

- n est un numéro de symbole,
- k correspond au nombre de paires de symboles pris en compte dans la fenêtre d'égalisation (EW),
- Re() représente la fonction partie réelle.

Les symboles transmis étant statistiquement indépendants, on montre que l'espérance E de $\phi_n$ s'éait :

$$E[\phi_n] = -K\sigma^2\tau_n$$

où :

- K est une constante,
- $\sigma^2$ est la variance du signal.

L'estimation du décalage de phase $\hat{\tau}_n$ est alors établie selon le processus défini ci-dessous :

$$\Delta\hat{\tau}_n = \Delta\hat{\tau}_{n-1} + g_2\, \phi_n$$

$$\hat{\tau}_n = \hat{\tau}_{n-1} + \Delta\hat{\tau}_n + g_1\, \phi_n$$

où $g_1$ et $g_2$ sont des constantes qui définissent l'évolution du processus.

Ces équations correspondent à une boucle du second ordre et se mettent sous la forme du graphe représenté figure 4 où $z^{-1}$ représente un retard de un symbole.

La fonction de transfert équivalente de cette boude du second ordre s'écrit alors dans le domaine de Laplace :

$$\frac{\hat{\tau}_n(p)}{\tau_n(p)} = \frac{K\sigma^2 g_1 p + K\sigma^2 g_2}{p^2 + K\sigma^2 g_1 p + K\sigma^2 g_2}$$

On obtient ainsi l'expression de la fréquence d'oscillation $\omega_0$ et du coefficient d'amortissement $\xi$ de la boude du second ordre :

$$\omega_0 = \sqrt{K\sigma^2 g_2}\,,$$

$$\xi = \frac{\sigma\sqrt{K}}{2} \frac{g_1}{\sqrt{g_2}}.$$

Les constantes $g_1$ et $g_2$ sont fixées empiriquement de façon à obtenir une convergence rapide de la boude du second ordre.

Des blocs de seuillage (L) permettent d'appliquer à $\phi_n$ et $\hat{\tau}_n$ des corrections discontinues, uniquement lorsqu'elles dépassent un certain seuil. Ce seuil est choisi de manière à augmenter la stabilité du système.

Un système récepteur (R) selon l'invention assure un fonctionnement indépendant de l'égaliseur adaptatif (E1) et du dispositif de récupération du rythme d'horloge (TR), évitant ainsi des interférences entre ces deux dispositifs. L'efficacité de l'égalisation se trouve par conséquent améliorée, de même que la convergence du dispositif permettant de récupérer le rythme d'horloge (TR).

**Revendications**

1.  Système récepteur (R) comprenant un premier égaliseur (E1) adaptatif associé à un premier détecteur à seuil (S1) et un dispositif permettant de récupérer le rythme d'horloge (TR) d'un système émetteur pour ledit système récepteur (R) à partir d'un signal égalisé ($y_n$) et un signal issu du seuillage ($s_n$) **caractérisé en ce que** ledit système récepteur (R) comprend également un second égaliseur (E2), qui est un égaliseur fixe, associé à un second détecteur à seuil (S2) ainsi qu'un dispositif (SW) permettant de commuter d'un premier mode de fonctionnement où le signal égalisé ($y_n$) et le signal issu du seuillage ($s_n$) sont destinés à être délivrés respectivement par le second égaliseur (E2) et le second détecteur à seuil (52) vers un second mode de fonctionnement où lesdits signaux ($y_n$ et $s_n$) sont destinés à être délivrés par le premier égaliseur (E1) et le premier détecteur à seuil (S1).

2.  Système récepteur (R) selon la revendication 1, **caractérisé en ce que** le premier égaliseur (E1) est destiné à transférer, à des intervalles de temps appropriés, des coefficients d'un filtre adaptatif vers le second égaliseur (E2), lesdits coefficients étant calculés à partir d'une erreur d'égalisation, égale à une différence entre les signaux issus du premier égaliseur (E1) et du premier détecteur à seuil (S1).

3.  Système récepteur (R) selon la revendication 1, **caractérisé en ce que** le dispositif de récupération du rythme d'horloge (TR) comprend un moyen permettant d'estimer un décalage de phase entre les horloges des systèmes émetteur et récepteur en asservissant une fonction $\phi$ telle que :

$$\phi_n = \frac{|s_n|^2 - |y_n|^2}{Re\left(s_n \sum_{i=0}^{k-1} \frac{(-1)^{k-i+1}}{3(k-i)}\left(s_{n-k+i} - s_{n+k-i}\right)\right)} \ ,$$

    où :

    -   n est un numéro de symbole,
    -   k indique le nombre de paires de symboles pris en compte dans une fenêtre d'égalisation,
    -   Re() représente la fonction partie réelle.

4.  Système récepteur (R) selon la revendication 1, **caractérisé en ce qu'**il comprend un moyen (F) permettant de faire fonctionner alternativement le dispositif de récupération du rythme d'horloge (TR) et le premier égaliseur (E1) durant le second mode de fonctionnement.

5.  Modem comprenant un système récepteur (R) selon l'une quelconque des revendications 1 à 4.

6.  Appareil récepteur décodeur de télévision comprenant un système récepteur (R) selon l'une quelconque des revendications 1 à 4.

7.  Téléviseur comprenant un système récepteur (R) selon l'une quelconque des revendications 1 à 4.

8.  Système de communication numérique comportant au moins un système émetteur et au moins un système récepteur (R), selon l'une quelconque des revendications 1 à 4, qui communiquent entre eux à travers un canal.

**Patentansprüche**

1.  Empfangssystem (R), das einen ersten adaptiven Entzerrer (E1), der mit einem ersten Schwellendetektor (S1) verbunden ist, und eine Vorrichtung umfasst, die die Taktrückgewinnung (TR) eines Sendesystems für dieses Empfangssystem (R) ausgehend von einem entzerrten Signal ($y_n$) und einem vom Schwellenwertvergleich erhaltenen Signal ($s_n$) ermöglicht, **dadurch gekennzeichnet, dass** dieses Empfangssystem (R) ebenfalls einen zweiten Entzerrer (E2), der ein fester Entzerrer ist, der mit einem zweiten Schwellendetektor (S2) verbunden ist, sowie eine Vorrichtung (SW) umfasst, die das Umschalten von einer ersten Betriebsart, in der das entzerrte Signal ($y_n$) und das vom Schwellenwertvergleich erhaltene Signal ($s_n$) dazu bestimmt sind, durch den zweiten Entzerrer (E2) bzw. den zweiten Schwellendetektor (S2) geliefert zu werden, auf eine zweite Betriebsart, in der diese Signale ($y_n$ und $s_n$) dazu bestimmt sind, durch den ersten Entzerrer (E1) und den ersten Schwellendetektor (S 1) geliefert zu werden, ermöglicht.

**2.** Empfangssystem (R) nach Anspruch 1, **dadurch gekennzeichnet, dass** der erste Entzerrer (E1) dazu bestimmt ist, bei angemessenen Zeitintervallen Koeffizienten eines adaptiven Filters an den zweiten Entzerrer (E2) zu übertragen, wobei diese Koeffizienten ausgehend von einem Entzerrungsfehler errechnet werden, der gleich einem Unterschied zwischen den aus dem ersten Entzerrer (E1) und dem ersten Schwellendetektor (S1) erhaltenen Signalen ist.

**3.** Empfangssystem (R) nach Anspruch 1, **dadurch gekennzeichnet, dass** die Vorrichtung zur Taktrückgewinnung (TR) ein Mittel umfasst, das es ermöglicht, eine Phasenverschiebung zwischen den Takten der Sende- und Empfangssysteme zu schätzen, indem eine Funktion $\phi$ gesteuert wird, derart, dass:

$$\phi_n = \frac{|s_n|^2 - |y_n|^2}{\mathrm{Re}\left( s_n \sum_{i=0}^{k-1} \frac{(-1)^{k-i+1}}{3(k-i)} \left( s_{n-k+i} - s_{n+k-i} \right) \right)} \cdot$$

wo:

- n eine Symbolnummer ist,
- k die Anzahl der in einem Entzerrungsfenster in Betracht gezogenen Symbolpaare anzeigt,
- Re() die Realteilfunktion darstellt.

**4.** Empfangssystem (R) nach Anspruch 1, **dadurch gekennzeichnet, dass** es ein Mittel (F) umfasst, das es ermöglicht, die Vorrichtung zur Taktrückgewinnung (TR) und den ersten Entzerrer (E1) während der zweiten Betriebsart abwechselnd zu betreiben.

**5.** Modem, das ein Empfangssystem (R) nach einem der vorhergehenden Ansprüche 1 bis 4 umfasst.

**6.** Fernseh-Empfangsdekodervorrichtung, die ein Empfangssystem (R) nach einem der Ansprüche 1 bis 4 umfasst.

**7.** Fernseher, der ein Empfangssystem (R) nach einem der Ansprüche 1 bis 4 umfasst.

**8.** Digitales Kommunikationssystem, das mindestens ein Sendesystem und mindestens ein Empfangssystem (R) nach einem der Ansprüche 1 bis 4 umfasst, die über einen Kanal miteinander kommunizieren.

**Claims**

**1.** A receiving system (R) including a first adaptive equalizer (E1) associated with a first threshold detector (S1) and a device (TR) which enables the timing of a transmitting system to be recovered for said receiving system (R) from an equalized signal ($y_n$) and a signal obtained by thresholding ($s_n$), **characterized in that** said receiving system (R) also includes a second equalizer (E2), which is a fixed equalizer associated with a second threshold detector (S2) and a device (SW) by means of which it is possible to switch between a first mode of operation, in which the equalized signal ($y_n$) and the signal ($s_n$) obtained by thresholding are to be supplied by the second equalizer (E2) and the second threshold detector (S2), respectively, and a second mode of operation, in which said signals ($y_n$ and $s_n$) are to be supplied by the first equalizer (E1) and the first threshold detector (S1), respectively.

**2.** A receiving system (R) as claimed in claim 1, **characterized in that** the first equalizer (E1) is adapted to transfer, at appropriate time intervals, coefficients of an adaptive filter to the second equalizer (E2), said coefficients being calculated from an equalization error equal to a difference between the signals obtained from the first equalizer (E1) and the first threshold detector (S1).

3. A receiving system (R) as claimed in claim 1, **characterized in that** the timing recovery device (TR) comprises a means by which it is possible to estimate a phase shift between the clocks of the transmitting system and the receiving system by controlling a function $\phi$ such that:

$$\phi_n = \frac{|s_n|^2 - |y_n|^2}{\mathrm{Re}\left( s_n \sum_{i=0}^{k-1} \frac{(-1)^{k-i+1}}{3(k-i)} (s_{n-k+i} - s_{n+k-i}) \right)} \ ,$$

wherein:

- n is a symbol number,
- k specifies the number of symbol pairs taken into account in an equalization window (EW),
- Re() represents the real part function.

4. A receiving system (R) as claimed in claim 1, **characterized in that** it comprises a means (F) which enables the timing recovery device (TR) and the first equalizer (E1) to operate alternately during the second mode of operation.

5. A modem including a receiving system (R) as claimed in any one of claims 1 to 4.

6. A set-top box including a receiving system (R) as claimed in any one of claims 1 to 4.

7. A television set including a receiving system (R) as claimed in any one of claims 1 to 4.

8. A digital communication system including at least one transmitting system and at least one receiving system (R) as claimed in any one of claims 1 to 4, which systems communicate with one another via a channel.

# FIG. 1

# FIG. 2

FIG. 3

FIG. 4